(19) Europäisches Patentamt
European Patent Office
Office européen des brevets

(11) Publication number: **0 266 754 A2**

# (12) EUROPEAN PATENT APPLICATION

(21) Application number: **87116234.3**

(22) Date of filing: **04.11.87**

(51) Int. Cl.4: **C08L 67/02**, C08J 3/20, C08L 71/02, D06P 3/54

(30) Priority: **05.11.86 JP 264677/86**
**08.11.86 JP 266278/86**
**27.10.87 JP 271378/87**

(43) Date of publication of application:
**11.05.88 Bulletin 88/19**

(84) Designated Contracting States:
**DE GB IT**

(71) Applicant: **Nippon Ester Company Ltd.**
**4-1, Hinakita-Machi**
**Okazaki City Aichi Prefecture(JP)**

Applicant: **KANEBO LTD.**
**17-4 Sumida 5-chome Sumida-ku**
**Tokyo 131(JP)**

(72) Inventor: **Oku, Shosuke**
**17-5, Mizuochi-cho 4-chome**
**Sabae City Fukui Pref.(JP)**
Inventor: **Watanabe, Noboru**
**68-2, Kamibata-cho**
**Sabae City Fukui Pref.(JP)**
Inventor: **Ohkawara, Tsuneo**
**38-3, Asakadai 1-chome**
**Sakai City Osaka-fu(JP)**
Inventor: **Hirota, Fumio**
**37-12, Egota 1-chome**
**Nakano-ku Tokyo(JP)**
Inventor: **Kado, Tsutomu**
**478-2, Imafuku**
**Kawagoe City Saitama Pref.(JP)**

(74) Representative: **Hansen, Bernd, Dr.rer.nat. et al**
**Hoffmann, Eitle & Partner Patentanwälte**
**Arabellastrasse 4**
**D-8000 München 81(DE)**

## (54) Colorants and polyester shaped articles mass-colored therewith.

(57) A heat resistant colorant for mass-coloring polyesters such as polyethylene terephthalate, comprising pigments and/or dyes and 42~2,000 parts per 100 parts of pigments and/or dyes by weight of a dispersing medium having a hydroxyl value not exceeding 25 mgKOH/g. The dispersing medium comprises a liquid dispersing medium, such as polyether, polyether-ester and the like, and a liquid aliphatic polyester dispersing medium. The colorants of the invention are easily blended and uniformly dispersed in a shape grade polyester, without causing degradation of the polyester, and the polyester shaped articles, such as fibers and films, mass-colored by the colorant are excellent in stability during the manufacture and are uniform in quality.

EP 0 266 754 A2

# COLORANTS AND POLYESTER SHAPED ARTICLES MASS-COLORED THEREWITH

The present invention relates to colorants for mass-coloring polyesters, particularly, colorants to be incorporated into polyesters during the formation of polyester fibers, films or the like. This invention also relates to polyester shaped articles, such as fibers, films or the like, mass-colored with the above colorants.

Aromatic polyesters represented by polyethylene terephthalate have been extensively used for manufacturing shaped articles, such as fibers, films, plastics, etc., by virtue of their excellent heat and weather resistances. As one of the processes for coloring these aromatic polyesters, there has been a process wherein pigments and/or dyes are mixed and dispersed therein, namely, a mass-coloration process, on which various studies have so far been made.

It has been known that pigments such as carbon black are incorporated into the reaction system and, however, only the inorganic pigments that are good in heat resistance, such as titanium dioxide, carbon black and the like, have been employable. Alternatively, a so-called color concentrate process is, since pigments are dispersed in the polymer at high temperatures, not only involved in a problem of dispersibility but also comprises complicated steps and, moreover, it has a drawback such that the polymer is degraded at high temperatures in the step to obtain master chips as well as in the step to mix them with other chips.

As a so-called "colorant for dope-dyeing" of synthetic fibers, there have been known those having pigments dispersed in a dispersing medium such as ethylene glycol and the like with the aid of a dispersing agent such as amino alcohol and the like, but they are not satisfactory and also do not resolve problems in practical use.

In the meanwhile, there is described in Japanese Patent Application Laid-open No. 58-149,311 a colorant which comprises a pigment dispersed in an ester of a mono-or polybasic organic acid as an acidic component and a mono-or polyhydric alcohol as an alcoholic component. Further, in Japanese Patent Application Laid-open No. 60-45,689, there is described a liquid colorant for mass-coloring polyester fibers wherein a liquid polyester is admixed with a pigment, and in Japanese Patent Application Laid-open No. 60-45,690, there is described a colorant wherein a pigment is incorporated into a liquid polyester with an acid value of about 1.0 and a viscosity of about 10 poises, obtained from adipic acid, ethylene glycol and 2-ethylhexyl alcohol, as starting materials. In the case where the colorants are mixed and dispersed in polyesters, particularly, the aromatic polyesters represented by polyethylene terephthalate, the heat stability of the polyesters is lowered so that problems, such as troubles in manufacture as well as discoloration caused by heat during melt-shaping, still remain unsolved. Also in the case where there are employed the colorants comprising, as a dispersing medium, a liquid aliphatic polyester obtained by reacting adipic acid with ethylene glycol, etc., the liquid aliphatic polyester lowers the inherent viscosity of the polyester to be colored so that not only, for example, the filament breakages occur more frequently, causing impairment of the spinnability, but also the filament qualities such as tenacity, elongation or the like are deteriorated. Further, the liquid polyester wherein 2-ethylhexyl alcohol is used as a part of the starting materials is not satisfactory in respect of heat resistance and, therefore, involved in problems such that generation of decomposed gases, discoloration, deterioration of physical properties, etc. are brought about on the mass-colored polyesters, during the shaping of the polyesters.

As a result of researches conducted to obtain colorants for mass-coloring polyesters which have no drawbacks as the above, we, the inventors, have accomplished the present invention.

An object of the present invention is to provide colorants for mass-coloring polyester fibers, films and other shaped articles.

Another object of the invention lies in the colorants having an excellent stability during the manufacture, preventing the deterioration of physical properties of the shaped articles.

Yet other object is to provide the colorants that are feasible for use.

Still further object is to provide mass-colored polyester articles, for example, fibers, films and the like, which are uniform in color and excellent in physical properties such as tenacity, elongation, and heat and weather resistances.

The above objects of the invention is achieved by a colorant for mass-coloring polyesters, having an excellent heat resistance, which comprises 100 parts by weight of a pigment and/or dye and 42~2,000 parts by weight of a dispersing medium (C) having a hydroxyl value not exceeding 25 mgKOH/g, which dispersing medium (C) comprises a liquid dispersing medium (A) and/or a liquid polyester dispersing medium (B), said liquid dispersing medium (A) having a molecular weight of at least 700 and a viscosity at 25°C not exceeding 150 poises.

Further, a polyester article mass-colored with the above colorant according to the present invention is characterized by comprising 100 parts by weight of a shape grade polyester and 0.1~12 parts by weight of the above colorant blended and uniformly dispersed therein.

The pigments and dyes to be applied to the present invention is not particularly specified but may be any of those generally being used, i.e., mention may be made of, for example, organic pigments such as azo series, phthalocyanine series, perinone series, anthraquinone series and the like; inorganic pigments such as carbon black, ultramarine, titanium dioxide and the like; and dyes such as azo series, perinone series, anthraquinone series and the like. In the colorants according to the present invention, use of pigments alone or in combination with dyes is preferred.

The liquid dispersing media (A) to be applied to the present invention have a hydroxyl value preferably of 25 mgKOH/g or less, particularly preferably 20 mgKOH/g or less, a molecular weight of at least 700, preferably 1,000~3,500, particularly preferably 1,500~2,500, and a viscosity at 25°C of 150 poises or less, preferably 100 poises or less. The molecular weight herein represents a number-average molecular weight.

An embodiment of the liquid dispersing media (A) is a polyether represented by the following general formula (I),

$R^1COO(R^3O)_nCOR^2$ ...(I)

wherein $R^1$ and $R^2$ are same or different alkyl groups each having 2~17 carbon atoms, $R^3$ is an alkylene group having 2~4 carbon atoms and may comprise same or different alkylene moieties, and n denotes an integer of 3~10. The both terminal acids may be same or different acids selected from the group consisting of valeric acid, caproic acid, perlargonic acid, capric acid, enanthic acid, caprylic acid, undecanoic acid, lauric acid, tridecanoic acid, myristic acid, pentadecanoic acid, palmitic acid, margaric acid, stearic acid, hydrogenated ricinoleic acid, oleic acid, elaidic acid, erucic acid, ricinoleic acid and the like. Particularly, the lauric acid and oleic acid are preferred.

Further, the polyalkylene glycols, i.e., a constituent of the polyether, include, for example, polyethylene glycol, polypropylene glycol, polytetramethylene glycol, and a block or random copolymer thereof. Particularly, the polyethylene glycol is preferred. The degree of polymerization (n) of the polyalkylene is 3~10, preferably 5~8.

Accordingly, as the compound of the general formula (I), polyethylene glycol dilaurate and polyethylene glycol dioleate are particularly preferred.

Another embodiment of the liquid dispersing media (A) is a polyether represented by the following general formula (II),

$R^4O(R^3O)_nCOR^2$ ...(II)

wherein $R^2$ is an alkyl group having 2~17 carbon atoms, $R^3$ is an alkylene group having 2~4 carbon atoms and may comprise same or different alkylene moieties, $R^4$ is an aromatic group substituted with alkyl group(s) having 2~18 carbon atoms, or an alkyl group, and n denotes an integer of 3~10. This polyester is composed of an ester of a monobasic fatty acid and an alkylene oxide adduct of a monohydric alcohol or alkyl phenol.

The monohydric alcohol is embodied in ethanol, propanol, butanol, pentanol, hexanol, heptanol, octanol, iso-octanol, 2-ethyl-hexyl alcohol, nonyl alcohol, decyl alcohol, cetyl alcohol, oleyl alcohol, benzyl alcohol or the like. Particularly, the cetyl alcohol and oleyl alcohol are preferred.

As an alkyl phenol, mention may be made of, for example, 2-methyl-phenol, 3-methyl-phenol, 4-methyl-phenol, 2,3-dimethyl-phenol, 2,4-dimethyl-phenol, 2,6-dimethyl-phenol, 3,4-dimethyl-phenol, 3,5-dimethyl-phenol, 2-ethyl-phenol, 3-ethyl-phenol, 4-ethyl-phenol, 2-propyl-phenol, 3-propyl-phenol, 4-propyl-phenol, 2-tert-butyl-phenol, 3-tert-butyl-phenol, 4-tert-butyl-phenol, 2-sec-butyl-phenol, 4-sec-butyl-phenol, 2-n-butyl-phenol, 3-n-butyl-phenol, 4-n-butyl-phenol, 4-methyl-2-tert-butyl-phenol, 4-tert-amyl-phenol, 4-n-amyl-phenol, 4-methyl-2-tert-amyl-phenol, 2,5-dimethyl-4-tert-butyl-phenol, 4-ethyl-2-tert-butyl-phenol, 2,6-di-tert-butyl-phenol, 4-diisobutyl-phenol, 3-methyl-4,6-tert-butyl-phenol, 3-methyl-4-diisobutyl-phenol, 2,3-dimethyl-4,6-di-tert-butyl-phenol, 3-ethyl-4,6-di-tert-butyl-phenol, 4-methyl-2,6-di-tert-amyl-phenol, 2,4,6-tri-tert-butyl-phenol, nonyl phenol, octyl phenol and the like. Particularly, the nonyl phenol and octyl phenol are preferred.

The alkylene oxide polymers to be added to the above, include homopolymers of ethylene oxide, propylene oxide, butylene oxide or the like, and random or block copolymers of a plurality of the alkylene oxides. Particularly, an ethylene oxide homopolymer is preferred. Further, the n is 3~10, preferably 5~8.

The fatty acids to be employed for the esterification include same or different acids selected from the group consisting of valeric acid, caproic acid, pelargonic acid, capric acid, enanthic acid, caprylic acid, undecanoic acid, lauric acid, tridecanoic acid, myristic acid, pentadecanoic acid, palmitic acid, margaric acid, stearic acid, hydrogenated ricinoleic acid, oleic acid, elaidic acid, erucic acid, ricinoleic acid and the like. Particularly, the lauric acid and oleic acid are preferred.

Accordingly, as the compound of the general formula (II), polyoxyethylene cetylether laurate, polyoxyethylene oleylether oleate, polyoxyethylene nonylphenylether oleate are particularly preferred. A further embodiment of the liquid dispersing media (A) is a bisphenol A derivative represented by the following general formula (III),

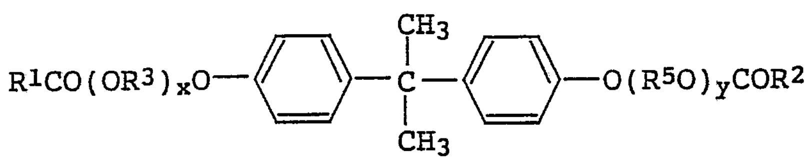
... (III)

wherein $R^1$ and $R^2$ are same or different alkyl groups each having 2~17 carbon atoms, $R^3$ and $R^5$ are same or different alkylene groups each having 2~4 carbon atoms, x and y denote integers of at least 0 respectively and the sum of x and y does not exceed 50. The above bisphenol A derivative is a fatty acid diester of an alkylene oxide adduct of bisphenol A. The alkylene oxides to be added ethylene oxide, propylene oxide, butylene oxide and the like. Either homopolymers or random or block copolymers of a plurality of the alkylene oxides can be used and, however, particularly an ethylene oxide homopolymer is preferred.

The x and y are integers of at least 0, respectively, and the sum of x and y does not exceed 50. If the sum of x and y exceeds 50, the viscosity of the liquid dispersing medium becomes too high, and so it is not preferred. Further, x plus y is preferred to be 2~10.

The fatty acids to be employed for the esterification include same or different acids selected from the group consisting of valeric acid, caproic acid, pelargonic acid, capric acid, enanthic acid, caprylic acid, undecanoic acid, lauric acid, tridecanoic acid, myristic acid, pentadecanoic acid, palmitic acid, margaric acid, stearic acid, hydrogenated ricinoleic acid, oleic acid, elaidic acid, erucic acid, ricinoleic acid and the like. Particularly, the lauric acid and oleic acid are preferred.

Accordingly, as the compound of the general formula (III), lauric acid ester and oleic acid ester, of an ethylene oxide adduct of bisphenol A are particularly preferred.

A still further embodiment of the liquid dispersing media (A) is a polyether-ester represented by the following general formula (IV),

$H(OR^6)_\ell - [ OOC\text{-}R^8\text{-}COO(R^7O)_m ]_p - H$ ...(IV)

wherein $R^7$ and $R^7$ are same or different alkylene groups, $R^8$ is an alkylene or phenylene group and may comprise same or different moieties, $\ell$ and m denote integers of 3~20 and p denotes an integer of 1~20. The above polyether-ester comprises a dicarboxylic acid and a polyether.

As the dicarboxylic acid, mention may be made of aromatic dicarboxylic acids such as terephthalic acid, isophthalic acid, naphthalene dicarboxylic acid, trimellitic acid, 5-sodium-sulfo-isophthalic acid and the like, and aliphatic dicarboxylic acids such as adipic acid, sebacic acid, glutaric acid and the like. Particularly, the adipic acid and terephthalic acid are preferred.

Further, as the polyether, mention may be made of adducts of ethylene oxide, propylene oxide and butylene oxide. Either homopolymers or random or block copolymers of a plurality of the alkylene oxides can be used and, however, particularly an ethylene oxide homopolymer is preferred.

The $\ell$ and m are 3~20, particularly preferably 5~15, respectively. Besides, the degree of polymerization (p) is preferably in the range between 1 and 20, and particularly preferred range is between 3 and 15. Accordingly, as the compound of the general formula (IV), a polyester of adipic acid or terephthalic acid with polyoxyethylene is particularly preferred.

Alternatively, as the liquid dispersing media (A) according to the invention, modified polyesters wherein liquid polyesters having alcoholic groups at least on one end of their molecule are linked together by aliphatic diisocyanates, are applicable.

The liquid polyesters having alcoholic groups at least on one end of the molecule include polycondensates of an aliphatic dicarboxylic acid such as adipic acid, sebacic acid, azelaic acid, glutaric acid, hydrogenated phthalic acid and the like, with a glycol such as ethylene glycol, propylene glycol, butylene glycol, pentyl glycol, hexyl glycol, neopentyl glycol, diethylene glycol and the like. As the aliphatic dicarboxylic acid, it is preferred to have 3~8 carbon atoms, and particularly adipic acid is preferred. Further, as the glycolic component, it is preferred to have 2~6 carbon atoms, and particularly propylene glycol and butylene glycol are preferred.

Other than the above dicarboxylic acids and glycols, adequately employable are. as an acidic component, aromatic dicarboxylic acids or anhydrides thereof, such as terephthalic acid, isophthalic acid, phthalic acid, phthalic anhydride and the like; monobasic carboxylic acids, such as coconut oil fatty acids, soybean oil fatty acids, oleic acid, lauric acid and the like; polybasic carboxylic acids or anhydrides thereof, such as trimellitic acid, pyromellitic acid and the like; and as an alcoholic component, monohydric alcohols, such as n-octyl alcohol, isooctyl alcohol, 2-ethyl-hexyl alcohol, n-nonyl alcohol, n-decyl alcohol and the like; and polyhydric alcohols, such as trimethylol propane, glycerine, pentaerythritol, dipentaerythritol, sorbitol and the like. Further, the polyethers which are components of the general formula (IV) also can be used.

The liquid polyesters having alcoholic groups at least on one end of the molecule can be obtained by adding an excess of the alcoholic components to the acidic components. The hydroxyl groups of the alcoholic component is preferably 1.1~2 moles, more preferably 1.2~1.5 moles, per 1 mole of the carboxylic groups of the acidic component.

As the diisocyanates to link the liquid polyesters together, mention may be made of aromatic diisocyanates and alicyclic diisocyanates, such as 2,4-tolylene diisocyanate, 2,6-tolylene diisocyanate, diphenylmethane-4,4′-diisocyanate, polymethylene polyphenyl diisocyanate, diphenylether-4,4′-diisocyanate, 3,3′-dimethyl-diphenylmethane-4,4′-diisocyanate and the like; and aliphatic diisocyanates, such as lysine diisocyanate, hexamethylene diisocyanate and the like. From the viewpoints of color shades and weather durabilities, the aliphatic diisocyanates, particularly, hexamethylene diisocyanate, is preferred.

In the case where the liquid polyesters having alcohols on at least one end of the molecule are linked by an aliphatic diisocyanate, the linking is effected with a mole ratio of the diisocyanate to the liquid polyester of 0.1~0.7, preferably 0.2~0.4.

The resultive modified polyesters have a hydroxyl value of preferably 25 mgKOH/g or less, particularly preferably 20 mgKOH/g or less.

If the molecular weight of the liquid dispersing media (A) is less than 700, the heat resistance will be lowered and gas generation during blending as well as thermal decomposition of the polyester will occur. Furthermore, if, when pigments or dyes are blended or admixed, the viscosity at 25°C of the liquid dispersing agent exceeds 150 poises, the pigment or dye content will become so low as 20% or less that an effective, deeply dyed article can not be obtained.

The liquid polyester dispersing media (B) to be applied to the present invention have a hydroxyl value preferably of 25 mgKOH/g or less, particularly preferably 20 mgKOH/g or less. The dispersing media (B) to be used are copolymers of an aliphatic dicarboxylic acid, such as adipic acid, sebacic acid, azelaic acid, glutaric acid and the like, with an alkylene glycol, such as ethylene glycol, propylene glycol, 1,3-butane diol, pentyl glycol, hexyl glycol, diethylene glycol and the like, or a polyalkylene glycol, such as polyethylene glycol, polypropylene glycol, polybutylene glycol and the like, or polyesters obtained from these aliphatic dicarboxylic acids and glycols, which have at least one terminal group blocked with a monohydric alcohol such as propyl alcohol, butyl alcohol, amyl alcohol and the like.

As the acidic component of the aliphatic polyester, aliphatic carboxylic acids having 3~8 carbon atoms are usually employed, while as the glycolic component, aliphatic glycols having 2~6 carbon atoms are usually employed. As the acidic component, adipic acid is most preferred and as the glycolic component, ethylene glycol and 1,3-butane diol are the most suitable. Besides, as the monohydric alcohols to block the terminal groups of the polyesters, propyl alcohol is most preferred.

The blocking by the monohydric alcohols of the terminal groups can be carried out either after the polymerization of the aliphatic polyesters or by admixing the monohydric alcohols to the reaction system and then effecting the polycondensation reaction. The admixing to the reaction system is more feasible.

The liquid polyester dispersing media (B) to be applied to the invention have a viscosity at 25°C preferably of 150 poises or less, particularly preferably 100 poises or less, and have a molecular weight preferably of 700~3,500, particularly preferably 1,000~2,500. The molecular weight represents a number-average molecular weight.

The liquid dispersing media (A) and liquid polyester dispersing media (B) to be applied to the present invention can be used appropriately in combination.

If dispersing media (C) comprising the liquid dispersing medium (A) and/or liquid polyester dispersing medium (B) have a hydroxyl value exceeding 25 mgKOH/g, the polyesters that are mixed and dispersed with the obtained colorants and then melt-shaped, will have the heat stability so lowered that troubles in manufacture, e.g., frequent occurrence of filament breakages, in the case of fiber manufacture, as well as discoloration are induced, or the heat and weather resistances of the fibers are impaired, and so it should be avoided.

The dispersing media (C) to be applied to the present invention is used in an amount of 42~2,000 parts, preferably 100~1,500 parts per 100 parts of pigments and/or dyes, by weight. If the above amount of the dispersing media is less than 42 parts by weight, the pigments, etc. are hardly dispersed with uniformity and, besides, the colorants obtained therefrom come to have such a high viscosity that they are difficult to be dealt with. If it exceeds 2,000 parts by weight, the viscosity of the obtained colorants is so lowered that the pigments, etc. deposit with the lapse of time and, moreover, in the case of the manufacture of fibers, the spinnability of the mass-colored polymer is so lowered that a uniform yarn quality is hardly obtainable.

Though it differs depending on the kind of pigments and/or dyes to be applied to the invention, there may be the case that the pigments and/or dyes tend to deposit within a relatively short period of time when the concentration of the pigments and/or dyes in the colorants is too low or the viscosity of the dispersing media (C) is too low, that is, the obtained colorants have a too low viscosity, in particular, of 200 poises or less. For polyester shaped products, since the shaping temperature is usually so high as 270°C or above, the coloring materials comprising, as a main constituent, an inorganic pigment having a high heat resistance, are preferably employed, whereas the above-mentioned tendency to deposition is noticeably high for inorganic pigments. This tendency is sometimes observed even when organic dyes or pigments are used. In order to prevent the above tendency, without changing the concentration in colorant of the dyes or pigments, in other words, without changing the amount of the colorants to be added to the polyester as well as the concentration of the dyes or pigment in the polyester shaped articles, inorganic fillers, if required, can be added in an amount of 1,400 parts or less per 100 parts of pigments and/or dyes, by weight.

As an inorganic filler applicable to the present invention, what is generally being used for the purpose of improvement in physical properties for plastics or of extension to reduce the cost of product, can also be used, such as, for example, silica, barium sulphate, calcium carbonate, talc, kaolin, clay, diatomaceous earth and the like. Amongst the above, those of an average particle diameter of 5 $\mu$m or less are preferred from the viewpoint of dispersion stabilities, while those having no crystal water eluting at low temperatures are preferred for restraining the decomposition, etc. of the polyester to be colored.

If the inorganic fillers are added in an amount exceeding 1,400 parts per 100 parts of the pigments and/or dyes, by weight, the obtained colorants so much increase in viscosity that they become difficult to be dealt with. However, since the inorganic fillers are generally less expensive than the dispersing media or dyes and/or pigments, the production cost of the colorants can be reduced by increasing the amount of the inorganic fillers to be added.

The colorants for mass-coloring polyesters of the present invention, can be manufactured by uniformly blending, according to any conventional processes, e.g., using a dispersing or kneading machine such as kneader, ball mill, sand mill, triple roll mill and the like. Needless to say, these may be used in combination. Further, the colorants for mass-coloring polyesters of the present invention may be used, if required, appropriately in combination with usual fluorescent whiteners, delustrants, brighteners, antistatic additives, heat-and light-stabilizers, etc.

The colorants according to the present invention can be blended in polyesters by usual processes, for example, blending by using a static mixer, etc., in a molten polyester prior to the shaping thereof.

In the case where polyester fibers are mass-colored with the colorants of the invention, 100 parts by weight of a fiber grade polyester are blended and colored with 0.5~12 parts, preferably 1~8 parts, by weight of the colorant of the present invention. Alternatively, in the case where polyester films are mass-colored, 100 parts by weight of a film grade polyester are blended and colored with 0.1~10 parts, preferably 0.5~5 parts, by weight of the colorant of the present invention. In the case where shaped articles other than the polyester fibers and films are mass-colored, 100 parts by weight of a shape grade polyester, for example, mold grade polyester, are blended and colored with 0.1~8 parts, preferably 0.5~5 parts, by weight of the colorant of the present invention.

As the polyesters of fiber grade, film grade or shape grade other than the above, aromatic polyesters such as polyethylene terephthalate, polybutylene terephthalate and the like, and copolyesters comprising at least 70 mole % of structural units such as ethylene terephthalate unit, butylene terephthalate unit and the like, are preferably used.

The invention is illustrated in more detail in the following examples. All parts and percents given below are by weight.

The dispersion media shown in Table 1 were prepared. In Table 1, the hydroxyl value were obtained by measuring a titrated amount of potassium hydroxide solution, according to the acetylation method.

Table 1

| Dispersing Medium No. | Liquid Dispersing Medium | Number-average Molecular Weight | Hydroxyl Value (mgKOH/g) | Viscosity at 25°C (poise) |
|---|---|---|---|---|
| 1 | Polyethylene glycol (PEG 400) dilaurate | 798 | 5 | 8 |
| 2 | Polyethylene glycol (PEG 200) dioleate | 762 | 4 | 7 |
| 3 | Polyoxynonyl-phenyl ether mono-oleate (x+y=4) | 913 | 4 | 10 |
| 4 | Bisphenol A ethylene oxide adduct dilaurate (x+y=4) | 738 | 13 | 2.8 |
| 5 | *1 Polyether-ester | 1,800 | 9 | 130 |
| 6 | *2 Modified polyester | 2,500 | 13.8 | 54 |

Note

*1: Obtained by reacting 0.9 mole of dimethyl terephthalate with 1 mole of a polyether polyol (molecular weight: 800) prepared by random copolymerization of ethylene oxide 1 mole and propylene oxide 3 moles.

*2: Obtained by reacting 0.3 mole of hexamethylene diisocyanate with 1 mole of a liquid polyester obtained from 1 mole of adipic acid, 0.7 mole of propylene glycol, 0.3 mole of ethylene glycol and 0.2 mole of 2-ethyl hexyl alcohol.

Further, the liquid polyester dispersing media shown in Table 2 were prepared.

Table 2

| Dispersing Medium No. | Liquid polyester Dispersing Medium | Acid Value (mgKOH/g) | Hydroxyl Value (mgKOH/g) |
|---|---|---|---|
| 7 | *3 | 0.5 | 22 |
| 8 | *4 | 0.7 | 20 |
| 9 | *5 | 0.8 | 18 |

Note

*3: Obtained by reacting 1 mole of adipic acid with 0.3 mole of polyethylene glycol (molecular weight: 2,000), 0.7 mole of ethylene glycol and 0.2 mole of amyl alcohol.

*4: Obtained by reacting 0.8 mole of adipic acid and 0.2 mole of isophthalic acid, with 0.4 mole of polypropylene glycol (molecular weight: 1,200), 0.3 mole of ethylene glycol, 0.3 mole of propylene glycol and 0.2 mole of butanol.

*5: Obtained by reacting 0.8 mole of adipic acid and 0.2 mole of cebacic acid, with 0.4 mole of polybutylene glycol (molecular weight: 1,000), 0.6 mole of diethylene glycol and 0.2 mole of amyl alcohol.

Example 1

Seventy-four parts of the dispersing medium No. 1, 25 parts of phthalocyanine blue pigment (trade name: Cyanine Blue RNF, manufactured by Toyo Ink Mfg. Co., Ltd.) and 1 part of carbon black (trade name: Raven 420 dense, manufactured by Columbian Carbon Co., Inc.) were kneaded together in a triple roll mill and a liquid colorant was obtained.

One hundred parts of polyethylene terephthalate were admixed with 3 parts of the above colorant and then spun and drawn, according to a conventional process, to form a multifilament yarn.

During the spinning and drawing, the heat resistance and compatibility of the colorant were good. The drawn yarn had a fineness of single filament of 3.20 d, a tensile strength of 5.5 g/d and an elongation at break of 45%, and was colored uniformly.

Example 2

Sixty-five parts of the dispersing medium No. 4, 12 parts of anthraquinone yellow (trade name: Filester Yellow RN, manufactured by Ciba-Geigy Corp.), 16 parts of perylene red (trade name: Paliogen Red K-3911 HD, manufactured by BASF A.-G.) and 7 parts of carbon black (trade name: Mitsubishi Carbon Black MCF-88, manufactured by Mitsubishi Chemical Industries Ltd.) were kneaded together in a triple roll mill and a liquid colorant was obtained.

In the same manner as Example 1, 100 parts of polyethylene terephthalate were admixed with 5 parts of the above colorant, and a multifilament yarn having a fineness of single filament of 3.15 d, a tensile strength of 5.2 g/d and an elongation at break of 55% and being colored uniformly, was obtained.

Example 3

Twenty-four and four-tenth parts of the dispersing medium No. 3, 56.8 parts of the dispersing medium No. 5, 0.6 part of anthraquinone dye (trade name: Estofil Yellow S-5GL, manufactured by Sandoz Ltd.) and 0.7 part of carbon black (trade name: Mitsubishi Carbon Black #10, manufactured by Mitsubishi Chemical Industries Ltd.) were kneaded together in a triple roll mill and a liquid colorant was obtained.

In the same manner as Example 1, 100 parts of polyethylene terephthalate were admixed with 3 parts of the above colorant, and a multifilanet yarn having a fineness of single filament of 2.05 d, a tensile strength of 5.4 g/d and an elongation at break of 40.5% was obtained. The spinning and drawing were smoothly carried out and the yarn was colored uniformly in yellow.

Example 4

Twenty-nine and three-tenth parts of the dispersing medium No. 2, 50.2 parts of the dispersing medium No. 6 and 2.5 parts of titanium dioxide (trade name: Fuji Titan TA-300, manufactured by Fuji Titanium Industry Co., Ltd.) were kneaded together in a porcelain ball mill and a white colorant was obtained.

One hundred parts of polyethylene terephthalate were admixed with 2 parts of the above colorant and, in the same manner as Example 1, a uniform white colored multifilament yarn was obtained, having a fineness of single filament of 6.0 d, a tensile strength of 4.2 g/d and an elongation at break of 58.3%. The spinning and drawing were smoothly carried out.

Example 5

Sixty-seven and two-tenth parts of the dispersing medium No. 6, 26.2 parts of anthraquinone dye (trade name: Kayaset Blue ACR, manufactured by Nippon Kayaku Co., Ltd.) and 6.6 parts of a perinone dye (trade name: Kayaset Red E-BG, manufactured by Nippon Kayaku Co., Ltd.) were kneaded together in a triple roll mill and a liquid colorant was obtained.

One hundred parts of polyethylene terephthalate were admixed with 5 parts of the above colorant and, in the same manner as Example 1, a uniform blue colored multifilament yarn was obtained, having a fineness of single filament of 2.5 d, a tensile strength of 5.1 g/d and an elongation at break of 42.5%. The spinning and drawing were smoothly carried out without occurrence of yarn breakages or generation of volatile matter.

Example 6

Seventy-two parts of the dispersing medium No. 7, 26 parts of phthalocyanine blue pigment (trade name: Cyanine Blue RNF) and 2 parts of carbon black (trade name: Raven 420 dense) were kneaded together in a triple roll mill and a liquid colorant was obtained. One hundred parts of polyethylene terephthalate were admixed with 3 parts of the above colorant, then spun and drawn, according to a conventional process, to form a colored multifilment yarn. During the spinning and drawing, the heat resistance and compatibility of the colorant were good. The drawn yarn had a fineness of single filament of 3.20 d, a tensile strength of 5.5 g/d and an elongation at break of 45%, and was colored uniformly in blue.

Example 7

Sixty-five parts of the dispersing medium No. 8, 12 parts of anthraquinone yellow (trade name: Filester Yellow RN), 16 parts of perylene red (trade name: Paliogen Red K-3911 HD) and 7 parts of carbon black (trade name: Mitsubishi Carbon Black MCF-88) were kneaded together in a triple roll mill and a liquid colorant was obtained.

In the same manner as Example 6, 100 parts of polyethylene terephthalate were admixed with 5 parts of the above colorant, and a multifilament yarn having a fineness of single filament of 3.15 d, a tensile strength of 5.2 g/d and an elongation at break of 55% and being colored uniformly, was obtained.

Example 8

Eighty-one and two-tenth parts of the dispersing medium No. 9, 17.5 parts of anthraquinone dye (trade name: Estofil Yellow S-5GL) and 0.7 part of carbon black (trade name: Mitsubishi Carbon Black #10) were kneaded together in a triple roll mill and a liquid colorant was obtained.

One hundred parts of polyethylene terephthalate having a number-average molecular weight of 21,000 were admixed with 3 parts of the above colorant, by using a static mixer of 18 elements (made by Kenics Corporation) and BKH mixer of 4 elements (made by Sulzer Brothers Ltd.) mounted in the polymer flow path.

Spinning and drawing were carried out according to a conventional process, to form a multifilament yarn having a fineness of single filament of 2.05 d, a tensile strength of 5.4 g/d and an elongation at break of 38.3%.

The operatability in the spinning and drawing was good and the yarn was uniformly colored in yellow.

Comparative Examples 1~6

Seventy-five parts of each one of the dispersing media given in Table 3 below and 25 parts of phthalocyanine blue pigment were kneaded together in a triple roll mill and the respective colorants were obtained. According to a conventional process, melt-spinning and drawing were carried out to form a colored multifilament yarn having a fineness of single filament of 3 d.

Table 3

| Comparative Example No. | Liquid dispersing Medium | Molecular weight | Hydroxyl Value (mgKOH/g) | Viscosity at 25°C (poise) | Result of Spinning and Drawing |
|---|---|---|---|---|---|
| 1 | Polydiethylene-adipate | 2,500 | 45 | 130 | Filament broke frequently during spinning, and accidentally wound around rolls during drawing. Bad |
| 2 | ADK New Ace Y5-30 (product of Asahi Denka Kogyo K.K.) | - | 34~41 | 150 | - ditto - |
| 3 | Polyethylene-glycol 400 | 380 | 272 | 1 | Plenty of gas generated during spinning. Filament winding was impossible. No good |
| 4 | PPG-Diol ED-28 (product of Mitsui Toatsu Chemical Inc.) | 4,000 | 28 | 8 | Filament broke often during spinning, and accidentally wound around rolls during drawing. A little bad. |
| 5 | *6 | 410 | 3.0 | 3.7 | Plenty of gas generated during spinning. Filament winding was impossible. No good. |
| 6 | Trimellitic acid tri-isodecyl ester | 630 | 15 | 5.2 | - ditto - |

Note: *6

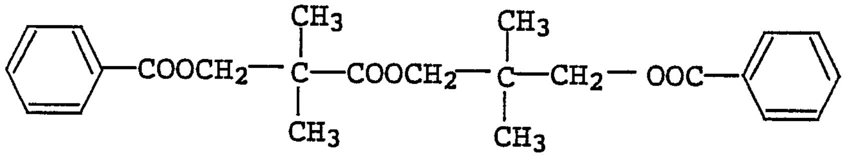

Examples 9 and 10

Two kinds of colorant having compositions respectively shown in Table 4 below were obtained by kneading in a triple roll mill. Viscosities at 25°C of these colorants were also shown in Table 4.

Further, deposition conditions of pigments in the obtained colorants 2 weeks and 2 months, respectively, after preparation of the colorants were shown in Table 4. In Table 4, the sign ○ means "no deposition", the sign △ "a little deposit was observed", and the sign x "an appreciable deposit was observed" (the same to other Examples hereinafter).

Three parts of each one of the obtained colorants were added to 100 parts of polyethylene terephthalate and, according to a conventional process, spinning and drawing were carried out to form a colored multifilament yarn having a fineness of single filament of 3 d. Whichever colorant was used, the heat resistance and compatibility of the colorant were good during the spinning and drawing, and uniformly colored yarns were obtained.

Table 4

| Colorant | | Example No. 9 | Example No. 10 |
|---|---|---|---|
| Composition (%) | Liquid Dispersing Medium No. 1 | 74 | 82 |
| | Cyanine Blue RNF | 17 | 17 |
| | Raven 420 | 1 | 1 |
| | Aerosil 200 *7 | 8 | 0 |
| Viscosity at 25°C (poise) | | 780 | 86 |
| Deposition Condition | 2 weeks after preparation | ○ | ○ |
| | 2 months after preparation | ○ | △ |

Note

*7: A trade name of silica manufactured by Nippon Aerosil Co., Ltd., having an average particle diametr of 12 nm.

Examples 11 and 12

Two kinds of colorant having compositions respectively shown in Table 5 below were obtained by kneading in a triple roll mill. Viscosities at 25°C of these colorants were also shown in Table 5.

Further, deposition conditions of pigments in the obtained colorants 2 weeks and 2 months, respectively, after preparation of the colorants were shown in Table 5.

Three parts of each one of the obtained colorants were added to 100 parts of polyethylene terephthalate and, according to a conventional process, spinning and drawing were carried out to form a colored multifilament yarn having a fineness of single filament of 3 d. Whichever colorant was used, the heat resistance and compatibility of the colorant were good during the spinning and drawing, and uniformly colored yarns were obtained.

Table 5

| Colorant | | Example No. 11 | Example No. 12 |
|---|---|---|---|
| Composition (%) | Liquid Dispersing Medium No. 3 | 56 | 86 |
| | Mitsubishi carbon Black MCF-88 | 14 | 14 |
| | Barium Sulphate #100 *8 | 30 | 0 |
| Viscosity at 25°C (poise) | | 350 | 32 |
| Deposition Condition | 2 weeks after preparation | ○ | ○ |
| | 2 months after preparation | ○ | △ |

Note

*8: A precipitated barium sulphate manufactured by Sakai Chemical Industry Co., Ltd., having an average particle diametr of 0.6 µm.

Examples 13 and 14

Two kinds of colorant having compositions respectively shown in Table 6 below were obtained by kneading in a triple roll mill. Viscosities at 25°C of these colorants were also shown in Table 6.

Further, deposition conditions of pigments in the obtained colorants 2 weeks and 2 months, respectively, after preparation of the colorants were shown in Table 6.

Three parts of each one of the obtained colorants were added to 100 parts of polyethylene terephthalate and, according to a conventional process, spinning and drawing were carried out to form a multifilament yarn having a fineness of single filament of 3 d. Whichever colorant was used, the heat resistance and compatibility of the colorant were good during the spinning and drawing, and uniformly colored yarns were obtained.

Table 6

| Colorant | | Example No. 13 | Example No. 14 |
|---|---|---|---|
| Composition (%) | Liquid Dispersing Medium No. 4 | 30 | 45 |
| | Light Yellow 6R *9 | 10 | 10 |
| | Toda Color 120 ED *10 | 45 | 45 |
| | Satintone No. 5 *11 | 15 | 0 |
| Viscosity at 25°C (poise) | | 320 | 43 |
| Deposition Condition | 2 weeks after preparation | ○ | ○ |
| | 2 months after preparation | ○ | × |

Note

*9: A titanium yellow manufactured by Bayer A.-G.

*10: A red oxide manufactured by Toda Kogyo Corp.

*11: Kaolin manufactured by Tsuchiya Kaolin Industry Co., Ltd., having an average particle diameter of 0.8 µm.

Examples 15 and 16

Two kinds of colorant having compositions respectively shown in Table 7 below were obtained by kneading in a triple roll mill. Viscosities at 25°C of these colorants were also shown in Table 7.

Further, deposition conditions of pigments in the obtained colorants 2 weeks and 2 months, respectively, after preparation of the colorants were shown in Table 7.

Five parts of each one of the obtained colorants were added to 100 parts of polyethylene terephthalate and, according to a conventional process, spinning and drawing were carried out to form a colored multifilament yarn having a fineness of single filament of 3d. Whichever colorant was used, the heat resistance and compatibility of the colorant were good during the spinning and drawing, and uniformly colored yarns were obtained.

Table 7

| Colorant | | Example No. 15 | Example No. 16 |
|---|---|---|---|
| Composition (%) | Liquid Dispersing Medium No. 5 | 60 | 90 |
| | Fuji Titan TA-300 | 10 | 10 |
| | Light Calcium Carbonate *12 | 30 | 0 |
| Viscosity at 25°C (poise) | | 790 | 180 |
| Deposition Condition | 2 weeks after preparation | ○ | ○ |
| | 2 months after preparation | ○ | × |

Note

*12: Average particle diameter, 1.5 µm.

Examples 17 and 18

Two kinds of colorant having compositions respectively shown in Table 8 below were obtained by kneading in a triple roll mill. Viscosities at 25°C of these colorants were also shown in Table 8.

Further, deposition conditions of pigments in the obtained colorants 2 weeks and 2 months, respectively, after preparation of the colorants were shown in Table 8.

Four parts of each one of the obtained colorants were added to 100 parts of polyethylene terephthalate and, according to a conventional process, spinning and drawing were carried out to form a colored multifilament yarn having a fineness of single filament of 3 d. Whichever colorant was used, the heat resistance and compatibility of the colorant were good during the spinning and drawing, and uniformly colored yarns were obtained.

Table 8

<table>
<tr><td colspan="2" rowspan="2">Colorant</td><td colspan="2">Example No.</td></tr>
<tr><td>17</td><td>18</td></tr>
<tr><td rowspan="4">Composition (%)</td><td>Liquid Dispersing Medium No. 6</td><td>64</td><td>84</td></tr>
<tr><td>Paliogen Red K-3911 HD</td><td>14</td><td>14</td></tr>
<tr><td>Mitsubishi Carbon Black #30 *13</td><td>2</td><td>2</td></tr>
<tr><td>Barium Sulphate #100</td><td>20</td><td>0</td></tr>
<tr><td colspan="2">Viscosity at 25°C (poise)</td><td>440</td><td>110</td></tr>
<tr><td rowspan="2">Deposition Condition</td><td>2 weeks after preparation</td><td>○</td><td>○</td></tr>
<tr><td>2 months after preparation</td><td>○</td><td>△</td></tr>
</table>

Note

*13: Carbon black manufactured by Mitsubishi Chemical Industries Ltd.

Examples 19 and 20

Two kinds of colorant having compositions respectively shown in Table 9 below were obtained by kneading in a triple roll mill. Viscosities at 25°C of these colorants were also shown in Table 9.

Further, deposition conditions of pigments in the obtained colorants 2 weeks and 2 months, respectively, after preparation of the colorants were shown in Table 9.

Four parts of each one of the obtained colorants were added to 100 parts of polyethylene terephthalate and, according to a conventional process, spinning and drawing were carried out to form a colored multifilament yarn having a fineness of single filament of 3 d. Whichever colorant was used, the heat resistance and compatibility of the colorant were good during the spinning and drawing, and uniformly colored yarns were obtained.

Table 9

| Colorant | | Example No. 19 | Example No. 20 |
|---|---|---|---|
| Composition (%) | Liquid Dispersing Medium No. 7 | 32 | 62 |
| | Filester Yellow RN | 4 | 4 |
| | Toda Color 120 ED | 34 | 34 |
| | Barium Sulphate #100 | 30 | 0 |
| Viscosity at 25°C (poise) | | 1,180 | 76 |
| Deposition Condition | 2 weeks after preparation | ○ | ○ |
| | 2 months after preparation | ○ | × |

Examples 21 and 22

Two kinds of colorant having compositions respectively shown in Table 10 below were obtained by kneading in a triple roll mill. Viscosities at 25°C of these colorants were also shown in Table 10.

Further, deposition conditions of pigments in the obtained colorants 2 weeks and 2 months, respectively, after preparation of the colorants were shown in Table 10.

Three parts of each one of the obtained colorants were added to 100 parts of polyethylene terephthalate and, according to a conventional process, melt-extrusion was carried out to form a film 50 µm thick. Whichever colorant was used, the heat resistance and compatibility of the colorant were good during the extrusion, and uniformly colored films were obtained.

Table 10

| Colorant | | Example No. 21 | Example No. 22 |
|---|---|---|---|
| Composition (%) | Liquid Dispersing Medium No. 8 | 55 | 85 |
| | Paliogen Red K-3911 HD | 10 | 10 |
| | Mitsubishi Carbon Black #10 | 5 | 5 |
| | Light Calcium Carbonate | 30 | 0 |
| Viscosity at 25°C (poise) | | 1,370 | 92 |
| Deposition Condition | 2 weeks after preparation | ○ | ○ |
| | 2 months after preparation | ○ | △ |

As explained above and demonstrated by way of examples, the colorant for mass-coloring polyesters according to the present invention can be readily blended to polyesters before or during the formation of fibers, films or other molded articles, without separation or deposition, and, further, can produce molded articles having highly uniform qualities, with a stabilized operability in the manufacture, preventing degradation of the polyesters.

Furthermore, in the colorants for mass-coloring polyesters according to the invention, when the colorants are too low in viscosity, the tendency to deposition with the lapse of time of the pigments in the colorants can be prevented, if required, by further adding inorganic fillers, without changing the concentration in the colorants of the dyes or pigments, in other words, without changing the amount of the colorants to be added to the molded articles as well as the concentration in the polyester articles of the dyes or pigments. Besides, since the inorganic fillers are generally less expensive than the dispersing media or dyes and/or pigments, the production cost of the colorants can be lowered by increasing the amount of the inorganic fillers to be added.

## Claims

1. A heat resistant colorant for mass-coloring polyesters, which comprises 100 parts by weight of a pigment and/or dye and 42~2,000 parts by weight of a dispersing medium (C) having a hydroxyl value not exceeding 25 mgKOH/g, which dispersing medium (C) comprises a liquid dispersing medium (A) and/or a liquid polyester dispersing medium (B), said liquid dispersing medium (A) having a molecular weight of at least 700 and a viscosity at 25°C not exceeding 150 poises.

2. A colorant as claimed in claim 1, which further comprises an inorganic filler in an amount not exceeding 1,400 parts per 100 parts of the pigment and/or dye, by weight.

3. A colorant as claimed in claim 1, wherein said liquid dispersing medium (A) is a polyether represented by the following general formula (I),

$R^1COO(R^3O)_nCOR^2$ ... (I)

wherein $R^1$ and $R^2$ are same or different alkyl groups each having 2~17 carbon atoms, $R^3$ is an alkylene group having 2~4 carbon atoms and may comprise same or different alkylene moieties, and n denotes an integer of 3~10.

4. A colorant as claimed in claim 1, wherein said liquid dispersing medium (A) is a polyether represented by the following general formula (II),

$R^4O(R^3O)_nCOR^2$ ...(II)

wherein $R^2$ is an alkyl group having 2~17 carbon atoms, $R^3$ is an alkylene group having 2~4 carbon atoms and may comprise same or different alkylene moieties, $R^4$ is an aromatic group substituted with alkyl group(s) having 2~18 carbon atoms or an alkyl group, and n denotes an integer of 3~10.

5. A colorant as claimed in claim 1, wherein said liquid dispersing medium (A) is a bisphenol A derivative represented by the following general formula (III),

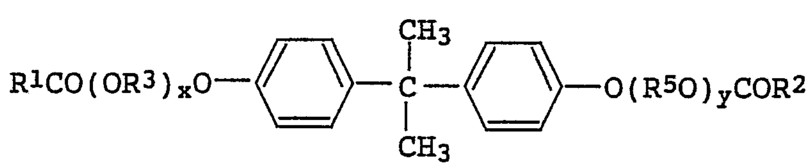 ... (III)

wherein $R^1$ and $R^2$ are same or different alkyl groups each having 2~17 carbon atoms, $R^3$ and $R^5$ are same or different alkylene groups each having 2~4 carbon atoms, x and y denote integers of at least 0 respectively and the sum of x and y does not exceed 50.

6. A colorant as claimed in claim 1, wherein said liquid dispersing medium (A) is a polyester-ether represented by the following general formula (IV),

$H(OR^6)_\ell\text{-}[OOC\text{-}R^8\text{-}COO(R^7O)_m]_p\text{-}H$ ...(IV)

wherein $R^6$ and $R^7$ are same or different alkylene groups, $R^8$ is an alkylene or phenylene group and may comprise same or different moieties, ℓ and m denote integers of 3~20 and p denotes an integer of 1~20.

7. A colorant as claimed in claim 1, wherein said liquid dispersing medium (A) is a modified polyester comprising liquid polyesters having alcoholic groups at least on one end of their molecule, which liquid polyesters are linked together by an aliphatic diisocyanate.

8. A colorant as claimed in claim 1, wherein said liquid polyester dispersing medium (B) is a copolymer of an aliphatic dicarboxylic acid with an alkylene glycol.

9. A colorant as claimed in claim 8, wherein said alkylene glycol is selected from the group consisting of ethylene glycol, propylene glycol, 1,3-butane diol, pentyl glycol, hexyl glycol, diethylene glycol, polyethylene glycol, polypropylene glycol and polybutylene glycol.

10. A colorant as claimed in claim 1, wherein said liquid polyester dispersing medium (B) is an aliphatic polyester having at least one terminal group blocked with a monohydric alcohol.

11. A colorant as claimed in Claim 10, wherein said monohydric alcohol is selected from the group consisting of propyl alcohol, butyl alcohol and amyl alcohol.

12. A colorant as claimed in claim 10, wherein said aliphatic polyester is a polycondensate of an aliphatic carboxylic acid having 3~8 carbon atoms with an aliphatic glycol having 2~6 carbon atoms.

13. A colorant as claimed in claim 1, wherein said liquid polyester dispersing medium (B) has a molecular weight of 700~3,500.

14. A colorant as claimed in claim 1, wherein said dispersing medium (C) has a viscosity at 25°C of 150 poises or less.

15. A colorant as claimed in claim 1, wherein the amount of the dispersing medium (C) is 100~1,500 parts per 100 parts of the pigment and/or dye, by weight.

16. A colorant as claimed in claim 1, wherein said hydroxyl value of the dispersing medium (C) is 20 mgKOH/g or less.

17. A polyester shaped article, which comprises 100 parts by weight of a shape grade polyester and 0.1~12 parts by weight of a colorant blended and uniformly dispersed therein, which colorant comprises a pigment and/or dye and 42~2,000% based on the weight of the pigment and/or dye of a dispersing medium (C) having a hydroxyl value not exceeding 25 mgKOH/g, said liquid medium (C) comprising a liquid dispersing medium (A) and/or a liquid polyester dispersing medium (B), said liquid dispersing medium (A) having a molecular weight of at least 700 and a viscosity at 25°C not exceeding 150 poises.

18. A polyester shaped article as claimed in claim 1, wherein said colorant further comprises an inorganic filler in an amount not exceeding 1,400% based on the weight of the pigment and/or dye.

19. A polyester shaped article as claimed in claim 17, which is in a form of fiber.

20. A polyester shaped article as claimed in claim 17, which in a form of film.